# EUROPEAN PATENT SPECIFICATION

(11) **EP 1 950 256 B1**
(45) Date of publication and mention of the grant of the patent: **22.03.2017**
(21) Application number: 07021393.9
(22) Date of filing: 11.08.2004
(51) Int. Cl.: C09D 5/36, C09C 1/04, C09D 11/50, C09C 1/00, H01F 10/12, B42D 25/328, B42D 25/378

(54) **FLAKE FOR COVERT SECURITY APPLICATIONS**
PLÄTTCHEN FÜR VERBORGENE SICHERHEITSANWENDUNGEN
PAILLETTE POUR APPLICATION DE SÉCURITÉ FURTIVES

(30) Priority: 14.08.2003 US 641695; 20.01.2004 US 762158
(43) Date of publication of application: 30.07.2008
(62) Divisional of application: 04744249.6
(73) Proprietor: Viavi Solutions Inc., Milpitas, CA 95035 (US)
(72) Inventor: Argoitia, Alberto, Santa Rosa CA 95401 (US); Coombs, Paul G., Santa Rosa CA 95404 (US); Markantes, Charles T., Santa Rosa CA 95401 (US); Kohlmann, Paul T., Windsor, CA 95492 (US)
(74) Representative: Jones, Keith William

(56) References cited:
- EP-A- 0 978 373
- WO-A-2004/024836
- US-A- 4 053 433
- US-A- 6 114 018
- US-A1- 2002 021 003

## Description

### FIELD OF THE INVENTION

The present invention relates generally to pigment flakes, and more particularly to a coating composition such as ink or paint that provides a covert security feature *(e.g.* anti-counterfeiting feature) to objects that the coating composition is applied to.

### BACKGROUND OF THE INVENTION

Specialty pigments have been developed for use in security applications, such as anti-counterfeiting devices printed on banknotes, packaging of high-value items, seals for containers, and even for direct application to commercial items. For example, the U.S. twenty-dollar Federal Reserve Note currently uses optically variable ink. The number "20" printed in the lower-right corner of the face of the note changes color as the viewing angle changes. This is an overt anti-counterfeiting device. The color-shifting effect is not reproducible by ordinary color photocopiers, and someone receiving a note can observe whether it has the color-shifting security feature to determine the note's authenticity.

Other high-value documents and objects use similar measures. For example, iridescent pigments or diffractive pigments are used in paints and inks that are applied directly to an article, such as a stock certificate, passport, original product packaging, or to seals that are applied to an article. As counterfeiters continue to become more sophisticated, security features that are more difficult to counterfeit are desirable.

One anti-counterfeiting approach uses microscopic symbols on multi-layer color-shifting pigment flakes. The symbols are formed on at least one of the layers of the multi-layer color-shifting pigment flakes by a local change of an optical property(s), such as reflectivity. The multi-layer color-shifting pigment flakes generally include a Fabry Perot-type structure having an absorbing layer separated from a reflective layer by a spacer layer. The reflective layer is typically a layer of metal, which renders the pigment flake essentially opaque. If a large portion of these types of pigment flakes are mixed with other pigment, the resultant color might be significantly different from the pigment, and if too few of these flakes are mixed with other pigment, they might be difficult to find. Patent Application WO2004024836 published on March 25, 2004, in the name of Argoitia et al., discloses diffractive magnetic flakes, which may have a diamond shape. U.S. Patent Application 20020021003 published on February 21, 2002, in the name of McGrew, teach using "quantum dot" crystals having a size of few nanometres for providing a distinct fluorescent signature to security inks, etc. Patent Application EP0978373 published on Feb. 09, 2000, in the name of Mueller et al., uses microscopic symbols on irregularly-shaped color-shifting flakes. The flakes are manufactured by providing symbols to a multi-layered sheet, which is broken afterwards into flakes with further grinding to achieve the desired flake size. Since the symbols are made by at least partial destruction of the sheet, the sheet breaks along or across the symbols, thus significantly reducing the yield and the recognition of the indicia. U.S. Patent No. 4,053,433 issued on October 11, 1977, in the name of Lee, discloses organic color coded particles having distinctive shapes such as a spherical shape.

Clear pigment flakes with holographic information are also used for anti-counterfeiting purposes. A monochromatic volume hologram is formed in a polymeric platelet using a reference laser light in the visible, infrared ("IR"), or ultraviolet ("UV") region. The polymeric platelet does not have a metallic reflective layer, and may be mixed in with other coatings, including metallic coatings (e.g. inks and paints), without disturbing the subjective color appearance of the coating. The polymeric platelets can also be incorporated in a varnish coating, which may be applied over an article without changing its color. When the polymeric platelets are irradiated with the reference laser light, the hologram may be read for the information it contains. However, polymeric materials may break down in sunlight and holograms have become relatively easy to counterfeit because an original hologram can provide a "fingerprint" (template) that facilitates copying. Holograms are not as strong an anti-counterfeiting device as they used to be.

Another technique uses epoxy-encapsulated shaped flakes of polyethylene terephthalate ("PET"). A reflective layer is deposited on a roll of PET, and then the PET is cut into pieces. The flakes are coated or encapsulated with epoxy to improve the durability of the reflective layer. These flakes are available in a variety of shapes, such as square, rectangle, hexagon, and "apostrophe," and a selection of reflective metallic tints, such as silver, pewter, gold, and copper. However, the epoxy layer and the relatively thick PET substrate (which typically has a minimum thickness of about 13 micrometres (microns) (0.5 mils) for use in vacuum deposition processes) result in a relatively thick flake, typically greater than 14 micrometres (microns). Unfortunately, such a thick flake is not desirable for use in covert applications where the thickness is substantially greater than the base pigment. Similarly, such thick flakes do not flow well in inks, and create lumps in paint. When paint includes a thick flake that creates a rough surface, a relatively thick clear topcoat is typically applied over the rough surface.

It is desirable to mark objects with covert anti-counterfeiting devices that overcome the limitations of the techniques discussed above.

### BRIEF SUMMARY OF THE INVENTION

In one aspect, the present invention provides a plurality of shaped opaque covert flakes as defined in claim 1.

In another aspect, a coating composition is provided including the covert opaque flakes. The covert flakes are typically dispersed in a carrier, such as a varnish base, paint vehicle or ink vehicle, to form the coating composition. The covert flakes are dispersed in sufficiently dilute concentration so that the covert flakes are not easily detectable in the coating composition by casual observation and can be clear or colored to match the color of a base pigment or have a different optical characteristic, such as being highly reflective ("bright" or "silver"). The thickness of the single layer of inorganic dielectric material is selected to provide a covert flake that has color to match a mica-based nacreous base pigment.

In a particular embodiment, covert security flakes fluoresce when illuminated with non-visible radiation. In an embodiment of the invention, fluorescing covert security flakes make up less than 1% of the composition.

In another embodiment, a coating composition has clear covert flakes that are not easily detectable in the coating composition by observation under visible light dispersed in a carrier.

A composition according to an embodiment of the present invention is applied to an object to provide a covert security feature. A pigmented composition may be used to print a field (*e.g.* an image) on the object, and a varnish composition may be used to print a clear field on the object, or to overprint an existing image on the object. In an embodiment of the invention, covert flake is mixed with base pigment to provide a covert security feature to images printed with the composition that look substantially similar to images printed with the base pigment.

In an embodiment of the present invention, symbols on covert flakes are not readable when the covert security feature is illuminated with non-visible radiation, *i.e.* when the flake is fluorescing. The location of a covert flake is identified using non-visible radiation, and then the flake is observed under visible light (typically under magnification of 50X-200X) to read the symbol(s) on the covert flake.

### BRIEF DESCRIPTION OF THE DRAWINGS

Fig. 1 is a plan view of a portion of a document with a security feature according to an embodiment of the present invention.
Fig. 2A is a simplified view of a portion of a deposition substrate having an embossed portion and a non-embossed portion.
Fig. 2B is a simplified view of a portion of another deposition substrate 11' having an embossed portion 13' and a non-embossed portion 15'
Fig. 3A is a simplified plan view of a portion of a security feature as part of an embodiment of the present invention.
Fig. 3B is a simplified plan view of a portion of a security feature as part of another embodiment of the present invention.
Fig. 3C is a simplified plan view of a portion of a security feature as part of another embodiment of the present invention.
Fig. 4A is a simplified cross section of a bright pigment flake 20 according to an embodiment of the present invention.
Fig. 4B is a simplified cross section of a bright flake 20' providing an elemental fingerprint.
Fig. 4C is a simplified cross section of a color-shifting pigment flake 30 according to another embodiment of the present invention.
Fig. 5 is a cross section of a varnish with clear or opaque covert flakes dispersed in a carrier according to an embodiment of the present invention.
Fig. 6 is a cross section of base flakes and covert flakes dispersed in a binder according to another embodiment of the present invention.
Fig. 7A is a simplified plan view of a portion of a security feature printed with clear, inorganic covert flake according to an embodiment of the present invention as seen under a microscope using UV illumination.
Fig. 7B is a simplified plan view of the portion of the security feature of Fig. 7A as seen under a microscope using visible light for illumination.
Fig. 8 shows the color travel for a test sample prepared with an ink, and for test samples prepared with the ink in combination with covert pigment flakes according to an embodiment of the present invention.
Fig. 9 is a simplified flow chart of a method of observing covert flakes according to an embodiment of the present invention.
Fig. 10 is a flow chart of a method of making pigment flake according to an embodiment of the present invention.

### DETAILED DESCRIPTION OF THE INVENTION

### I. Introduction

Flakes for covert security applications are not typically seen by casual observation. Some sort of inspection technique, such as inspection under a microscope or illumination with a particular type of light, is used to find and/or read the flakes. In one embodiment, flakes containing indicia, such as a symbol or a particular shape, substantially match the visual characteristics of a bulk pigment or other substance they are mixed with. In a particular embodiment, a single-layer inorganic flake having a selected shape or symbol is mixed with an iridescent mica-based flake or other base pigment.

In one embodiment, opaque flakes containing indicia, such as a particular shape, substantially match the visual characteristics of a bulk pigment or other substance they are mixed with. In a particular embodiment, a single-layer inorganic opaque flake having a selected shape is mixed with an iridescent mica-based flake or other base pigment. For the purpose of this discussion, a "single layer" of inorganic material includes multiple layers of the same inorganic material built up upon each other.

Inorganic covert flakes are particularly desirable in applications where heat, solvents, sunlight, or other factors may degrade organic flakes. For example, an inorganic covert flake used in an explosive is detectable even after exposure to high temperatures and/or pressures, and is persistent in the environment. Flakes according to embodiments of the present invention also are substantially thinner, typically less than about 10 micrometres (microns), than conventional shaped flakes, enabling their use in ink and produce a smooth surface finish in paints without having to use a clear topcoat. Thin, inorganic flakes according to embodiments of the present invention also have a density closer to the density of base pigment flakes made using similar techniques. Thick flakes incorporating organic substrates often have a different density than thin-film base pigment flake, and may segregate, either before or during application while the carrier is fluid. Flake segregation is undesirable because it can result in an inconsistent ratio of covert and base flakes in a composition, and may degrade the covert nature of the covert flakes if segregation results in an unduly high concentration of covert flakes.

In yet another embodiment, covert flakes are mixed with a chemical, such as an explosive, explosive precursor, food, drug, or controlled substance. The covert flakes include indicia, such as symbols and/or other patterning (*e.g*. grooves) that identify the manufacturer or provide other specific information. Inorganic flakes are particularly desirable in applications where heat, solvents, sunlight, or other factors may degrade organic flakes. For example, an inorganic covert flake used in an explosive is detectable even after exposure to high temperatures and/or pressures, and is persistent in the environment.

### II. Exemplary Covert Flake

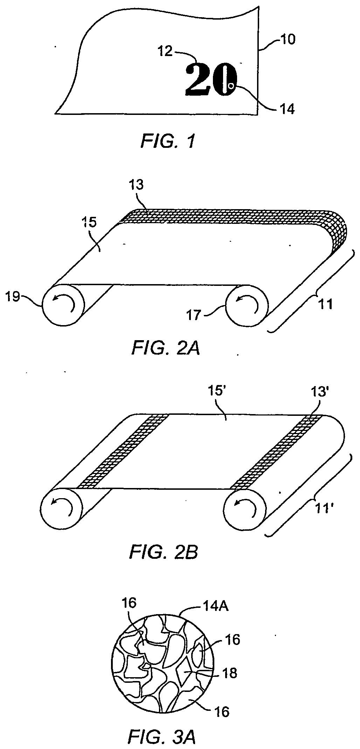

Fig. 1 is a plan view of a portion of a document 10 with a security feature 12 according to an embodiment of the present invention. At least a portion 14 of the security feature 12 is printed with ink or paint including opaque flakes having indicia (hereinafter "covert flakes") mixed with bulk pigment, such as bulk pigment flakes. In one embodiment, the covert flakes have a particular shape, such as being square, rectangular, trapezoidal, "diamond" shaped, or round, for example. In another embodiment, the covert flakes include a symbol and/or grating pattern. In a particular embodiment, the grating pattern has a grating spacing that is not optically active in the visible range of the spectrum. That is, these grating patterns do not form a visible diffraction grating. Covert flakes are also sometimes referred to as "taggent" flakes, although not all taggent flakes are necessarily covert flakes.

Generally, the bulk pigment particles, including bulk pigment flakes, have an irregular shape. In one embodiment, the covert flakes are distinguishable from bulk pigment flakes by their shape. Alternatively, bulk pigment flakes have a first selected shape, and the covert flakes have a second selected shape. Production of shaped pigment flakes is accomplished by a variety of techniques, such as using a patterned substrate to deposit the flake material on the substrate and then separating the flake from the substrate to obtain the pattern, or using a laser or other means to cut the patterned flakes from a sheet of flake material. The selected shape of the covert flakes may be associated with a manufacturing facility, date of manufacture, or other aspect of the document 10, or ink used in producing the document, for example.

A roll coater is one type of apparatus that can be used to produce covert flakes according to embodiments of the invention. A roll of a sheet of polymer substrate material (also known as a "web") is passed through a deposition zone(s) and coated with one or more thin film layers. Multiple passes of the roll of polymer substrate back and forth through the deposition zone(s) may be made. The thin film layer(s) is then separated from the polymer substrate and processed into flake. Other apparatus and techniques may be used.

It is generally desirable to limit the total thickness of thin film layers deposited (and hence removed) from a roll of polymer film substrate to less than about 10 micrometres (microns). PET is one type of polymer film substrate used in roll coaters, and the PET film substrate is usually at least about 13 micrometres (microns) thick. Thinner PET film tends to thermally deform during vacuum deposition processes. Both the heat in the deposition zone and the heat of condensation of the deposited thin-film layer(s) increase the temperature of the polymer substrate as it passes through a deposition zone. Thus, the minimum thickness of flake cut from and incorporating PET film is about 13 micrometres (microns).

Alternatively, or in addition to, having a selected shape, the covert flakes may include a grating pattern. The grating pattern is embossed on a substrate used in a roll coater prior to depositing thin film layers that are processed into flakes, or otherwise formed. In a further embodiment, a selected amount (percentage) of the deposition substrate surface area is embossed with a grating pattern or shape pattern to obtain a selected amount of covert flakes when the thin film layers are stripped from the deposition substrate and processed into flakes. This technique provides covert flakes with the same optical design (thin film layer composition and thickness) as the base flake. For example, embossing 10% of the deposition substrate surface area with a grating pattern and/or shape pattern would result in a pigment mixture having about 10% covert flakes. Different rolls of deposition substrate are produced with different percentages of embossed surface area to obtain pigment mixtures having different amounts covert flake, or are embossed with different patterns to obtain different shapes and/or grating patterns.

Fig. 2A is a simplified view of a portion of a deposition substrate 11 having an embossed portion 13 and a non-embossed portion 15. The embossed portion has a frame, which is exaggerated for purposes of illustration, and alternatively or optionally has a grating or symbol, for example, and the non-embossed portion is essentially smooth. Alternatively, the non-embossed portion is embossed with a different frame, grating, or symbol. The ratio of the surface area of the embossed portion 13 to the non-embossed portion 15 produces a selected amount of taggent flake (produced from the embossed portion) having the same thin-film structure as the base flake (produced from the non-embossed portion). The deposition substrate 11 travels from one roll 17 to another 19 through a deposition zone (not shown) in a roll coater, but alternative embodiments use different types of substrates and deposition systems. Fig. 2B is a simplified view of a portion of another deposition substrate 11' having an embossed portion 13' and a non-embossed portion 15'.

In addition to having a selected shape, the covert flakes include one or more symbols. The symbol could be a letter, number, or other marking. A symbol could indicate the manufacturer of the covert flake, the user of the covert flake, or a date code, for example. The symbol(s) could be embossed on a substrate used in a roll coater prior to depositing thin film layers that are processed into flakes, or formed on the thin film layers after deposition, such as by laser ablation, embossing, or etching, for example.

A pigment flake with a selected shape or symbol provides a security feature even if it is easily observable; however, if a pigment flake with a selected shape and symbol is not easily observable, a counterfeiter might not even be aware that a covert flake is present. One embodiment of the present invention uses covert pigment flake that has the same optical characteristics as the base pigment. The percentage of covert pigment flakes is sufficiently small so that the covert pigment flakes are not easily found, even under microscopic examination. For example, if an ink composition has covert pigment flakes making up less than 1% of the total weight of pigment (*i.e.* base pigment plus covert pigment), the covert pigment flakes are difficult to find.

The covert pigment flakes are not seen by unaided human vision, but are visible under magnification of about 50 X to 300 X. Covert pigment flakes having essentially the same visual characteristics can be mixed with base pigment in a wide range of proportions without significantly affecting the color of the composition. In some embodiments, covert pigment flakes are readily identifiable in compositions having 5-10 weight % covert pigment flakes and 95-90 weight % base pigment flakes having similar appearance (*e.g*. color and/or color travel). Often, shaped opaque covert flakes are easily identifiable in the field using hand-held microscopes (*e.g*. "shirt-pocket" microscopes), and require less magnification to identify than similar sized flakes having symbols.

The approach is to use an opaque covert flake with a selected shape that is a different color than the base flake. In one embodiment, the opaque covert flake is a bright metallic ("silver") flake having a thin-film layer of aluminum or other reflector between layers of a dielectric material, such as MgF₂. Bright flake is generally highly reflective over a wide range of visible wavelengths, and often does not have a characteristic color. Bright flake made with gold and copper may appear yellowish and reddish, for example. It has been found that between about 0.25 weight % to about 5 weight % of shaped (*e.g*. "diamond" shaped) bright flake in colored base pigments can be added without causing a noticeable change in color, but are still easily identifiable under illuminated magnification of about 50 X (*i.e*. 50 time magnification). Under illuminated magnification, both the shape and high brightness of the flake distinguish it from the base flake. When less than about 0.25% of shaped bright flake is used the covert flakes become difficult to detect because dilution with the base flake results in fewer shaped bright flakes in the field of view.

When the amount of bright flake exceeds about 5 weight %, the color (*e.g.* hue) of certain types of flakes, particularly dark colored flakes, changes. In these instances, too much bright flake essentially "dilutes" the color of the base pigment. However, using shaped bright flake in compositions having color-shifting pigment is highly desirable because a single type of shaped bright flake is added in small quantities to many different types (color and/or color travel) of pigment flake, and a relatively small amount of shaped bright flake provides a covert security feature. Similarly, dilution of color is not critical in applications where compositions containing pigment and bright flake are not intended to replace or otherwise be indistinguishable from compositions containing 100% pigment flake.

Fig. 3A is a simplified plan view of a portion 14A of a security feature 14 illustrated in Fig. 1. The portion 14A of the security feature 14 is viewed under magnification, typically about 20X-200X, in order to see the shape of the flakes, which are typically about 5-100 micrometres (microns) across, more typically about 20-40 micrometres (microns) across. The security feature has been printed with ink including base pigment particles 16 and a covert pigment flake 18 having a selected shape, in this case a "diamond" shape. The base pigment particles are illustrated as being irregularly shaped flakes. Alternatively, the base pigment particles are flakes having a selected shape. The optical characteristics and concentration of the covert pigment flake is chosen so as to not disturb the visual appearance of a composition made with the base pigment particles.

When the covert pigment flake is illuminated with non-visible radiation, such as UV or IR light or an electron beam, the covert pigment flake glows. In a particular example, the covert pigment flake fluoresces under UV light. Illuminating the covert pigment flake with non-visible radiation allows an observer to identify where the covert pigment flake is located in the security feature, even if present in very small quantities. The observer then inspects the covert pigment flake under visible light to see the selected shape of the covert pigment flake, and to see the symbol(s) on the covert flake.

The base pigment particles 16 are illustrated as being irregularly shaped flakes. Alternatively, base pigment flakes have a selected (*i.e.* regular) shape. Similarly, the covert pigment flake 18 could have a grating. The addition of a grating further increases the difficulty of counterfeiting. In some embodiments, the covert pigment flake 18 has generally the same optical characteristics as the base pigment particles. Alternatively, the covert pigment flake 18 has different optical characteristics as the base pigment particles but is present in sufficiently small quantities so as not to disturb the visual appearance of a composition made with the base pigment particles.

In a particular example, the "diamond-shaped" covert flakes were bright flakes about 25 micrometres (microns) by 35 micrometres (microns) across. The shaped flakes are made by embossing a diamond pattern into a roll of PET deposition substrate material, and then depositing a standard thin-film design for bright flake (*e.g*. about 100-60 nm of Al between layers of MgF₂ that are each about 400 nm thick). The total thickness for this bright flake is about 900 nm, which is about one micrometre (micron). The embossed pattern is also known as a "frame" (as opposed to a grating which is intended to produce a pattern in or on the flake), and is positive in some embodiments and negative in other embodiments.

The combination of a metal layer with one or more dielectric layers facilitates removal of the flake from the deposition substrate. A thin film stack having only dielectric layers is brittle and often has residual stresses from the deposition process. Such thin film stacks tend to break more randomly, resulting in fewer shaped flakes. An all-metal stack or single layer is difficult to process into patterned flakes according to the frame of the deposition substrate because the metal is relatively ductile. In particular embodiments, metal-dielectric and dielectric-metal-dielectric flake having a total thickness of between about 0.5 micrometres (microns) and about 3 micrometres (microns) provides a good combination of ductile and brittle characteristics that result in good patterning of the flake when it is removed from the substrate and processed. In a particular embodiment, shaped bright flake having a total thickness of about one micrometre (micron) of a ductile metal layer between brittle dielectric layers yielded about 90% diamond-shaped flakes from an embossed deposition substrate.

The thin-film layers were stripped from the deposition substrate and processed into flake using conventional techniques. The embossed diamond pattern provided lines along which the thin-film layers broke into flakes having the selected diamond shape. In another embodiment, the diamond-shaped flakes were about 12 micrometres (microns) by 16 micrometres (microns) and included a grating on the major surface of the flakes. The grating was nominally 2000 lines/mm and did not produce a noticeable diffractive effect in a composition when used as a taggent. The shape of the 12-by-16 micrometres (microns) flake was easily seen at 100 X magnifications; however, the grating was not easily seen at this magnification. The grating was readily apparent at 400 X magnifications. In other embodiments, a grating is coarser, and is easily seen at the same magnification (*e.g.* 50 X to 100 X) that is used to discern the shape of the taggent flakes. Thus, gratings used to provide a security feature to taggent flakes do not have to be optically active in the visible portion of the spectrum.

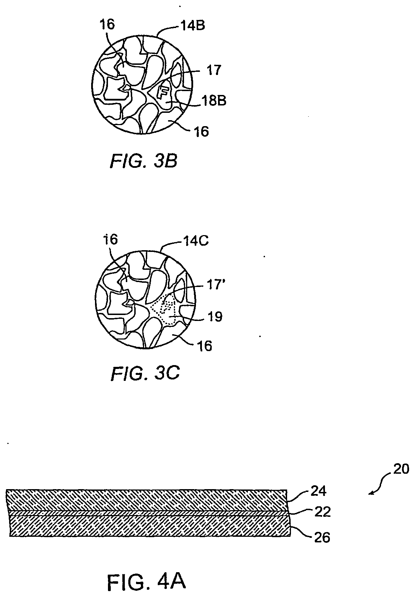

Fig. 3B is a simplified plan view of a portion of a security feature 14B according to an embodiment of the present invention. The security feature has been printed with ink including base pigment particles 16 and a covert pigment flake 18B having an irregular shape and containing a symbol 17, in this case a stylized "F". Several different symbols and combination of symbols could be used. The portion 14B of the security feature is viewed under magnification, typically about 100X-200X, in order to see the symbol(s), which are typically about 0.5-20 micrometres (microns) high, on the covert pigment flake 18B.

The covert pigment flake 18B was made by depositing one or more thin film layers on a substrate, such as a plastic film, separating the thin film layer(s) from the substrate, and processing the separated thin film layer(s), such as by milling and sieving, into the desired flakes. The covert pigment flakes are typically about 5-100 micrometres (microns) across, and more typically about 20-100 microns across. The symbol 17 is typically about 0.5-20 micrometres (microns) tall. In a particular embodiment, the symbol 17 is about 700 nanometers tall and in another embodiment the symbol is about 15 micrometres (microns) tall. It is generally desirable to have the symbols sufficiently close so that most flakes have at least an identifiable portion of a symbol. In one embodiment, symbols that were 8 micrometres (microns) tall were spaced about 2 micrometres (microns) apart, which resulted in covert flakes having about 6 symbols per flake, on average. Symbols having bilateral symmetry appear the same whether viewed from the top or the bottom of a clear flake, but such symmetry is not required. In another embodiment, symbols that were about 15 micrometres (microns) tall were spaced about 4 micrometres (microns) apart.

The symbols are typically embossed on the substrate, and the thin film layer(s) deposited over the embossed substrate. The surface of the substrate, namely the symbol, is replicated in at least the first thin film layer that is deposited on the substrate, in either positive or negative relief. Thus, when the thin film layer(s) is separated from the embossed substrate and processed into flake, at least some of the flakes contain the symbol. The spacing of embossed symbols on the flake can be selected so that essentially every flake above a certain size will contain at least one symbol.

The base pigment particles are illustrated as being irregularly shaped flakes. Alternatively, the base pigment particles have a selected shape. Similarly, the covert pigment flake 18B has a selected shape, in addition to the symbol 17, and a superimposed grating, such as a diffraction grating, could be included either over the entire flake or over selected portions of the flake, such as over the field of the flake, but not over the symbol. Alternatively, one type of grating is formed in the field of the flake, and another type of grating (*e.g*. with different pitch) is formed in the symbol area. The addition of a grating further increases the difficulty of counterfeiting. The covert pigment flake has generally the same optical characteristics as the base pigment particles, or is present in sufficiently small quantities so as not to disturb the visual appearance of a composition made with the base pigment particles.

In a particular embodiment, the base pigment particles are flakes of mica coated with a layer of TiO₂ or other dielectric material. The coating material typically has a relatively high index of refraction. Mica is a naturally occurring mineral that is relatively inexpensive and easily processed into flake substrate. When mica flake substrate is coated with a layer of high-index material of a selected thickness, a nacreous pigment flake is obtained. Mica flake substrate can be coated with several alternative materials using a variety of processes. Such pigments are commonly known as "mica-based" pigments. A photocopy of an image printed with such nacreous pigment flakes does not look like the original, thus mica-based pigment flakes are desirable for use to provide overt security features. However, shaping mica flake substrate or providing a symbol on mica flake substrate is impractical. Covert pigment flake according to an embodiment of the present invention is mixed with the mica-based pigment to enable a covert security feature to be included in images printed with mica-based pigment flakes. Covert pigment flakes made of a single layer of inorganic dielectric material, such as TiO₂ or ZnS, can have an appearance similar to a mica-based pigment if the covert pigment flake has a thickness about five times the quarter-wave optical thickness ("QWOT") at a selected wavelength in the visible spectrum. Typically, a single-layer covert pigment flake of ZnS intended to match the appearance of a mica-based pigment has a thickness of about 60 nm to about 600 nm.

Processing all-dielectric flake from a deposition substrate having an embossed diamond-shaped pattern tends to have a lower yield than a counterpart metal-dielectric flake.

Fig. 3C is a simplified plan view of a portion of another illustrative security feature 14C. The security feature has been printed with ink including base pigment particles 16 and a clear covert flake 19 having an irregular shape and containing a symbol 17' , in this case a stylized "F". Several different symbols and combination of symbols are alternatively used. Fig. 4A is a simplified cross section of a bright pigment flake 20 according to an embodiment of the present invention. A reflective layer 22 is between two dielectric thin-film layers 24, 26. The dielectric thin-film layers 24, 26, provide stiffness to the bright pigment flake 20 and facilitate removal of the pigment flake from the roll coater substrate. It is a requirement to keep the bright pigment flake less than 10 micrometres (microns) thick to provide a composition that dries or cures to a smooth surface. In particular embodiments, the thickness of the flake is between about 1 micrometre (micron) and about 3 micrometres (microns). Thinner flakes tend to be more difficult to process and handle because they weigh so little, and thicker flakes are stronger, and hence more difficult to break along the frame pattern.

The reflective layer 22 is typically a thin-film layer of a highly reflective metal such as aluminum, platinum, gold, silver, or copper, or a moderately reflective metal, such as iron or chromium. The reflective layer 22 is sufficiently thick to be opaque (reflective) in the visible portion of the spectrum, but not so thick as to interfere with separation of the thin-film layers from the substrate and subsequent processing into flake. In other words, a metal reflective layer that was too thick would provide a ductile layer between the relatively brittle dielectric layers 24, 26 and tend to interfere with processing the deposited layers into flakes. Suitable materials for the dielectric layers include ZnS, MgF₂, SiO₂, Al₂O₃, TiO₂, Nb₂O₅, and Ta₂O₅, among others. In some embodiments, the dielectric thin-film layers 24, 26 also provide environmental protection for the reflective layer 22.

The bright flake 20 has a selected shape, and optionally has other indicia, such as a surface (grating) pattern or an elemental fingerprint. In sufficiently low concentrations, the bright flake 20 is added to colored pigment and colored compositions (*e.g*. inks and paints). Shaped bright flake can be added to base (*i.e*. randomly shaped or alternatively shaped) bright flake as a covert security feature.

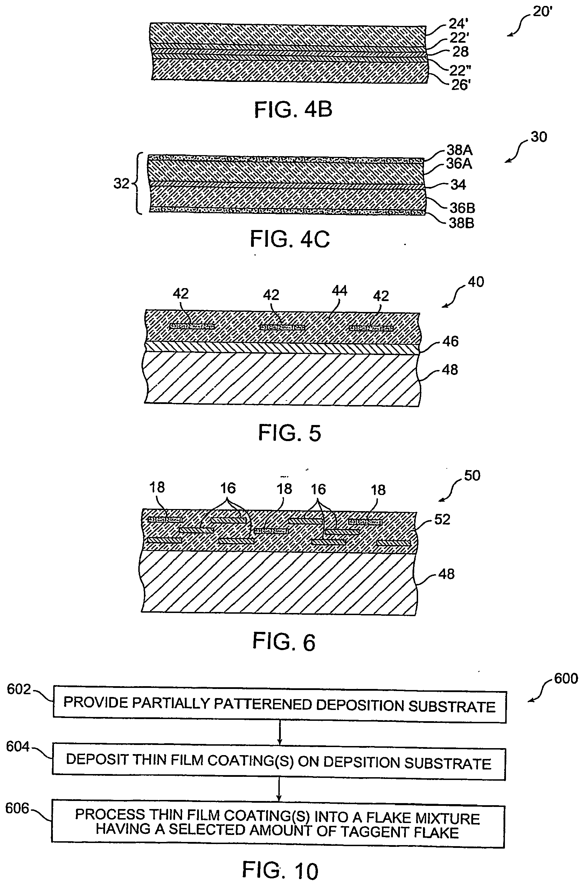

Fig. 4B is a simplified cross section of a bright flake 20' with an elemental indicator layer 28. The bright flake 20' has reflective layers 22' , 22" between dielectric layers 24', 26', and a layer 28 providing an elemental indicator. The elemental indicator layer 28 is a layer of material that is not found in a base pigment that the bright flake will be used with, and that is readily detectable using elemental analysis techniques, such as secondary ion mass spectrometry ("SIMS"), energy dispersive X-ray ("EDX") and Auger analysis. Furthermore, the elemental indicator is present in the covert flake but not in the base flake, and micro-SIMS, micro-EDX or micro-Auger analysis easily detects this difference. Merely adding the indicating element to the pigment mixture (*e.g*. adding a small amount of a compound containing the indicating element to the carrier) would not overcome this security feature.

The elemental indicator layer 28 is not optically active because it is between the two opaque reflective layers 22' , 22". The reflective layers 22' , 22" are selected to be of the same material used in the base flake, such as aluminum. Suitable materials for an elemental indicator include platinum, iridium, osmium, vanadium, cobalt, and tungsten, among others. Those of skill in the art appreciate that the elemental indicator material chosen depends on the base pigment it will be used with. In an alternative embodiment, the reflective layer of bright pigment is of an elemental indicator material (*see* Fig. 3B, ref. num. 22). For example, covert bright or colored pigment flake using platinum as the reflective layer is mixed with base bright flake or colored pigment flake using aluminum as the reflective layer. In a further embodiment, the amount of flake having the elemental indicator incorporated into a pigment mixture or composition is chosen to provide a selected elemental ratio (*e.g.* aluminum to platinum) in the pigment mixture. In an alternative or further embodiment, the material of the dielectric thin-film layers 24' , 26' (Fig. 4A, ref. nums. 24, 26) is chosen to provide an elemental indicator.

Fig. 4C is a simplified cross section of a color-shifting pigment flake 30 according to another embodiment of the present invention. The color-shifting pigment flake 30 is generally known as a symmetrical 5-layer Fabry-Perot interference flake. A thin film stack 32 includes a reflective metal layer 34, two spacer layers 36A, 36B, and two absorber layers 38A, 38B. The absorber layers are typically very thin, semi-opaque layers of chromium, carbon, or other material. The reflector, spacer, and absorber layers are all optically active, that is, they contribute to the optical performance of the color-shifting pigment flake. Each side of the flake provides similar Fabry-Perot interference structures to incident light, and hence the flake is optically symmetrical. Alternatively, the color-shifting pigment flake is an all-dielectric pigment flake.

The color and color travel of the color-shifting pigment flake is determined by the optical design of the flake, namely the material and thicknesses of the layers in the thin film stack 32, as is well-known in the art of optically variable pigments. The optical design of the color-shifting pigment flake 30 is typically chosen to match the optical properties of the base pigment flake that it will be mixed with. The color-shifting pigment flake 30 is shaped (see Fig. 3A, ref. num. 18), and optionally or alternatively includes other indicia, such as a surface grating pattern and/or elemental indicator.

For example, the reflective layer includes an elemental indicator, either a reflective metal that is different than the base pigment flakes, or includes an additional elemental indicator layer(s), which may or may not be optically active (see Fig. 3C, ref. num. 28). Alternatively or additionally, the spacer layers 36A, 36B and/or the absorber layers 38A, 38B include an elemental indicator. For example, if the base pigment flake uses MgF₂, SiO₂, or Al₂O₃ as a spacer layer material, the covert pigment flake 30 uses different spacer layer material, such as TiO₂ or ZnS. Spacer and/or absorber indicator materials include elements that are easily detected using elemental analysis.

In some embodiments, using a different spacer material and/or reflector material results in a covert pigment flake 30 that has different optical properties than the base flake. For example, even if the covert and base flakes have similar color at normal incidence, the color travel might be different. Generally, low-index spacer materials (such as MgF₂ and SiO₂) provide more color travel ("fast shifting" pigments) than high-index spacer materials (such as ZnS and TiO₂). However, such covert flakes can be added in relatively high concentrations to the base pigment flake, even if the color travel does not precisely match that of the base flake, because most casual observers cannot detect the difference between a mixture according to an embodiment of the invention and 100% base flake.

Fig. 5 is a cross section of a varnish 40 with covert flakes 42 dispersed in a carrier 44 according to an embodiment of the present invention. The carrier is clear or tinted, and the covert flakes 42 are at a concentration selected to avoid casual visual detection. An optional color coat or bright (*e.g*. "chromed") coating 46 has been applied to an object 48 underneath the varnish 40. The varnish 40 provides a covert security feature to the object without disturbing its appearance. In a particular embodiment, the optional color coat 46 is an image printed with nacreous or color-shifting pigment to provide an overt security feature to the object. The object is a document, product, packaging, or seal, for example. The varnish 40 enables providing a covert security feature to an object that already has a covert security feature without significantly altering the appearance of the object. For example, if stock certificates have been printed with overt security features and it subsequently becomes desirable to provide a covert security feature to the stock certificates, the overt security feature is over-printed with the varnish 40 or a similar ink composition (*i.e.* an essentially clear ink composition containing covert flakes). In another embodiment, an additional covert security feature is provided to an object already having one or more covert security features. In a particular embodiment, the covert flakes make up not more than 2% of the varnish. Additional discussion regarding varnishes is provided below in the section on experimental results.

Fig. 6 is a cross section of a composition 50 (*e.g.* ink or paint) including base pigment flakes 16 and covert flakes 18 dispersed in a binder or carrier 52 according to another embodiment of the present invention. The covert flakes 18 have a selected shape and other indicia (*e.g.* Fig. 3C,), such as an elemental indicator or a surface-grating pattern. Alternatively, the composition 50 includes covert pigment flake that is shaped and includes a symbol (*e.g*. Fig. 3A, ref. num. 18 and Fig. 3B, ref. num. 18B). In one embodiment, the amount of covert flake 18 in the composition is less than 1% of the total weight of the base pigment flake 16 and covert flake 182 ("total pigment weight"), which sufficiently disperses the covert flakes in the base pigment flake to make casual detection of the covert flake difficult. In an alternative embodiment, the amount of covert flake in the composition is greater than 1%. The composition 50 has been applied to an object 48, such as a label, product packaging, bank note, or consumer item.

Adding covert flake to an existing ink or paint composition provides a covert security feature to images made of the ink or paint. For example, ink with color-shifting pigment is used to provide a color-shifting image as an overt security feature on a bank note or other object. Covert flake according to an embodiment of the present invention is added to the ink, and the resultant mixture is used to print images that appear substantially similar as those printed with the ink. Thus, a casual observer of the bank note does not notice a change in the appearance of the overt security feature (*i.e.* color-shifting image) after the covert security feature is added. The indicia of the covert flake indicate a date-of-manufacture, a printing location, and/or the source (manufacturer) of the ink, for example.

### III. Identification of Covert Flakes

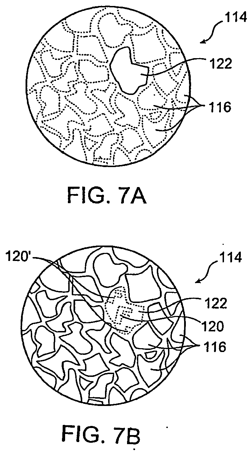

Fig. 7A is a simplified plan view of a portion of a security feature 114 printed with clear, inorganic covert flake 122 to illustrate the present invention as seen under a microscope using UV illumination. The flakes are shown in a single layer for simplicity of illustration (*compare* Fig. 4). The clear covert flake 122 fluoresces (appears bright) and is easily distinguished from the base pigment flakes 116, which appear dark and are shown in dashed lines for purposes of illustration. Typically, a much larger field of view is observed (*i.e*. lower magnification, typically 20X-50X). A reduced field of view is being shown for simplicity of illustration. Once the location of the fluorescent covert flake is identified, the viewers can "zoom-in" on the covert flake.

Fig. 7B is a simplified plan view of the portion of the security feature 114 of Fig. 7A as seen under a microscope using visible light for illumination. It was discovered that symbols on the clear covert flake were not easy to read under UV light because the fluorescence was a bulk phenomenon and obscured the symbol. When the UV light was switched off and the clear covert flake 122 was observed under a microscope using visible light, the faint outline of a symbol 120 (as well as the flake) was observable. Fluorescent covert flakes are particularly desirable when the concentration of flakes is low. The clear covert flake 122 and the symbol 120 are shown as dashed lines in this view to represent that they appear as faint outlines under visible light. The base pigment flakes 116 are shown as solid lines because they are typically prominent under visible light. In a particular embodiment, the clear covert flake was ZnS having an index of refraction of about 2.2 in a high-gloss varnish that was first observed under UV light, and then the symbol on the flake was read using visible light at a magnification of 100X.

A similar result is expected for covert pigment flakes that fluoresce under UV light or other non-visible radiation. For example, covert pigment flake dispersed in base pigment flake, having similar visual characteristics, is difficult to detect when the covert pigment flake is sufficiently dilute. In one embodiment, the covert pigment flake has a selected shape that is observable under UV light. In another embodiment, the covert pigment flake has a symbol that is not easily observable under UV light, but is observable under visible light. The location of the covert pigment flake with the symbol is identified using UV light and then the UV light is switched off and the symbol is read using visible light.

Alternatively, a material that fluoresces at a shorter wavelength when illuminated with light at a longer wavelength is used to fabricate covert flakes or covert pigment flakes. It is believed that this type of fluorescence would be less easily noticed by a counterfeiter, enhancing it use in covert security applications. In one embodiment, near infrared or infrared light is used to illuminate covert flake or covert pigment flake to fluoresce in the visible range.

### IV. Experimental Results

Prior to developing clear covert flake or single-layer covert pigment, various alternatives were evaluated. A test standard using 100% magenta-to-green optically variable intaglio ("OVI") pigment flake was produced and measured. All taggent samples had a grating pattern of 2000 lines/mm, which makes the taggent flakes easier to distinguish from the base flake (*i.e.* locate) and more difficult to counterfeit. The grating pattern did not induce diffractive properties to images printed with the test compositions. It is believed that the low portion of the taggent flakes in combination with not being well oriented to the viewer avoided a diffractive property from occurring. In a particular embodiment of the present invention, a grating pattern was included on taggent flakes with symbols. The symbols were identifiable under a microscope at a first magnification, but the grating pattern was not easily seen at this first magnification. The grating pattern was seen at a higher magnification. It is believed that including such a grating pattern further enhances the covert nature of the taggent flake because a counterfeiter might see the symbol under microscopic examination, but not see the grating pattern, and hence not include it in a counterfeit article.

The first test sample ("sample 1") contained 90% (by weight) of the conventional magenta-to-green pigment flake mixed with 10% magenta-to-green OVI pigment flake including symbols ("taggent flake"). The taggent flakes were easy to detect by routine microscopic inspection, and the color performance of the mixture was the same as the test standard because the color of the taggent flake was well matched to the color of the base flake. However, close color matching involves careful monitoring of the production of the taggent flake. Similarly, a new optical design for each color of taggent flake would generally be used to match each color of base flake. Thus, this approach does not provide a generic taggent flake that can be mixed with a variety of colored base pigments.

A simpler approach is to use a standard taggent flake design that can be used with many different colors of base flake. Single-layer MgF₂ taggent flake (was mixed with the magenta-to-green OVI base pigment, the taggent flake making up 10% of the total pigment weight ("sample 2"). As with the color-matched OVI, color performance was essentially identical to samples produced with 100% base OVI pigment flake. However, the MgF₂ flakes were difficult to detect under routine microscopic examination, even at a concentration of 10%.

"Silver" (aluminum) taggent flake was also evaluated. Fabrication of silver flake is relatively simple and these flakes were very easy to detect at a concentration of 5%. It was hoped that silver taggent flakes would be able to be mixed with many colors of base pigment. However, the color performance of an intaglio blend containing only 5% silver taggent flake mixed with the magenta-to-green OVI base pigment ("sample 3") was poor. Thus, silver taggent flake may be useful in certain compositions, but appear to degrade the color performance of at least some base pigments.

Another approach is to use a standard taggent flake design that can be used with many different colors of base flake. Bright taggent flake using an aluminum reflector layer (giving the flake a "silver" appearance) was also evaluated. Fabrication of bright flake is relatively simple and these flakes were very easy to detect at a concentration of 5% when mixed with colored base pigment flakes. Bright taggent flakes are used with many colors of base pigment to provide covet security features. The amount of bright taggent flakes in the composition depends on the desired result. For example, the color performance of an intaglio blend containing 5% bright taggent flake mixed with the magenta-to-green OVI base is distinguishable in a side-by-side comparison from a composition of 100% magenta-to-green OVI flake. A composition essentially indistinguishable from 100% magenta-to-green OVI flake uses less than 5% bright flake, such as compositions with concentrations between about 0.25 weight % and 3 weight % of bright taggent flake in magenta-to-green OVI flake. It is believed that bright flake in concentrations greater than 5% may be added to pigment flake providing lighter or less saturated color without noticeably changing the appearance of the composition. Bright taggent flakes are easy to detect under modest magnification, even at concentrations below 1%, because of the combination of having a selected shape and of being a different color (*e.g.* "silver" instead of magenta).

Finally, clear taggent flake was made from a single layer of ZnS. Production of this flake is relatively easy, and detectability at 10% concentration was easy, which is to say it was more difficult than detecting the OVI taggent flakes, but much, much easier than detecting the MgF₂ taggent flakes. An intaglio blend with 10% ZnS flake and 90% magenta-to-green OVI flake ("sample 4") was compared against the test standard. The color performance was nearly equal, with a slight (about 3%) decrease in chroma. The persons involved in this subjective comparison are quite experienced in evaluating color performance of optically variable pigments, and used a side-by-side comparison against a standard. It is believed that 10% of this flake added to an existing ink or paint composition would preserve the color performance sufficiently so that an average observer would not notice any change. The ZnS clear taggent flake appears able to be added to a large number of colored pigments, including optically variable pigments without noticeably altering the appearance of compositions made with the colored pigments, and hence enables a generic taggent flake.

The measured optical performance of the samples described above is provided in Table 1:

**Table 1: Optical Performance of Intaglio Blends**

| Sample # | L* | a* | b* | C* | h |
|---|---|---|---|---|---|
| Test standard | 49.27 | 40.32 | -31.05 | 50.89 | 322.4 |
| Sample 1 | 49.08 | 40.25 | -30.87 | 50.73 | 322.51 |
| Sample 2 | 49.42 | 40.62 | -31.04 | 51.12 | 322.61 |
| Sample 3 | 52.67 | 35.26 | -27.26 | 44.57 | 322.29 |
| Sample 4 | 49.66 | 39.22 | -29.85 | 49.29 | 322.72 |

Clear ZnS flake for use as a taggent or covert taggent was also evaluated in varnish compositions. It was determined that in some instances almost one-third of the varnish composition could be clear flake with almost no change in the perceived appearance of the varnish composition. A high-gloss varnish base was used to make the varnish compositions and the varnish compositions were applied to white card stock of the type normally used for color evaluation of inks and paints. All varnish compositions were compared against a test standard of the varnish base without clear flake.

In the first varnish composition, 3% of as-deposited (*i.e*. not heat-treated for clarity) single-layer ZnS looked essentially identical to the test standard. A second varnish composition having 5% single-layer as-deposited ZnS flake was barely noticeably different when compared against the test standard, but it is believed that a casual observer would not notice the slight amount of yellowing. A third varnish sample with 10% single-layer as-deposited ZnS flake exhibited a noticeable change in appearance when compared against the test standard, and it is believed that some casual observers would notice a field printed with this composition on a very light background. However, this composition might be useful for printing on non-white substrates, such as bank notes or off-white stock certificates, where the slight yellowing would be less likely to be noticed. Alternatively, a non-gloss varnish base is used to further reduce likelihood of detection when used as a covert security feature. A fourth varnish sample with 15% single-layer as-deposited ZnS exhibited noticeable yellowing, even without a side-by-side comparison with the test standard.

Single-layer ZnS flake was heat treated to clarify ("bleach") the flake. The flake was heated to 200 °C for two hours in air. Heat treating ZnS flake to enhance fluorescence (550 °C for 10 hours in air) also bleaches the flake, but bleaching can be achieved with the shorter heat treat. A varnish composition using 20% single-layer bleached ZnS showed almost no perceptible color change. Thus, it is believed that at least 10% of unbleached single-layer ZnS flake and at least 20% of bleached single-layer ZnS flake could be added to a high-gloss varnish base as a covert taggent.

ZnS is further desirable as a taggent flake because, unlike some flake including a metal (*e.g*. aluminum) layer, ZnS is durable in the presence of water, acid, base, and bleach. Unlike some organic flake, ZnS is also durable in the presence of organic solvents and sunlight.

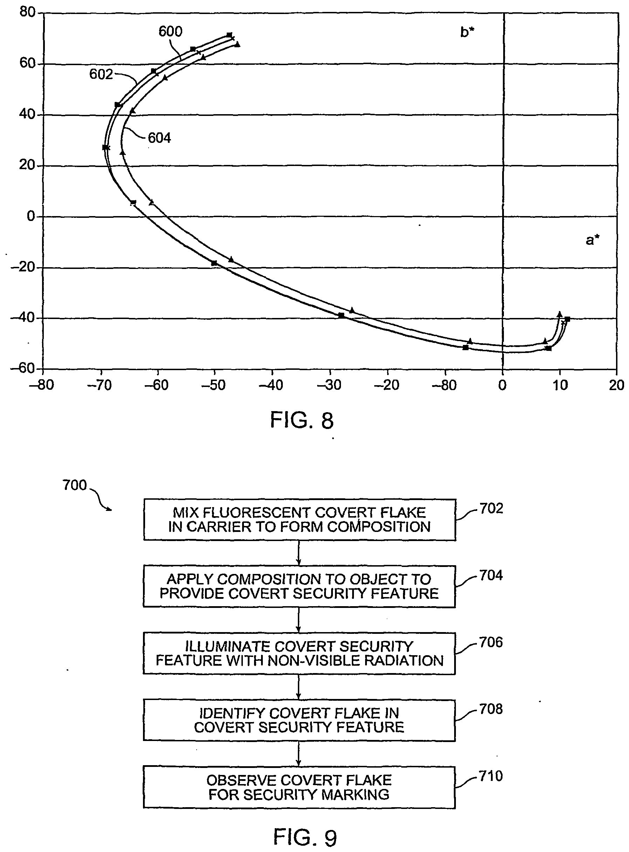

Fig. 8 shows the color travel for a test sample prepared with an ink, and for test samples prepared with the ink in combination with covert pigment flakes according to an embodiment of the present invention. The color plots are according to the CIE La*b* conventions. The illumination and viewing angles were ten degrees off from the specular angle to avoid the strong gloss component associated with clear-coated samples. The samples were characterized using eleven angles of illumination/viewing from 15°/5° to 65°/55° in 5° increments. The first point of the curve (*i.e.* the upper left point) corresponds to the 15°/5° datum, and the last (*i.e.* eleventh) point corresponds to the 65°/55° datum.

A first curve 600 shows the measured color travel for a test sample prepared with blue-to-green optically variable pigment flake. A second curve 602 shows the measured color travel for a sample prepared with 95 weight percent blue-to-green optically variable pigment flake and 5 weight percent of single-layer ZnS flake about 700 nm thick and having an average particle size of about 20 micrometres (microns). Symbols on the flake were about 8x6 micrometres (microns), separated by about 2 micrometres (microns) of field. The weight percent is the percent of the total weight of the flake used to prepare the ink composition for the sample. A third curve 604 shows the measured color travel for a sample prepared with 90 weight percent blue-green optically variable pigment flake and 10 weight percent of the same ZnS flake used in the sample associated with the second curve. These curves illustrate that very similar optical performance is achievable for ink compositions having up to 10 weight percent covert flake. In particular, the color travel is nearly identical for all three samples, and the chroma is only slightly less for the sample made with 10% clear covert flake. Thus, a covert flake according to an embodiment of the present invention is added to an existing optically variable ink to form a composition to provide a covert security feature without significantly altering the appearance of images printed with the composition.

### V. Exemplary Methods

Fig. 9 is a simplified flow chart of a method 700 of providing an object with covert flakes according to an embodiment of the present invention. Covert flakes are mixed in a carrier (step 702) to provide a composition, such as ink or paint, in which the covert flakes are not easily detectable by observation under visible light. In one embodiment, the composition includes base pigment flakes or particles. In another embodiment, the covert flakes are covert pigment flakes that have a symbol and a selected shape. The composition is applied to the object (step 704) to provide a covert security feature. In one embodiment, the composition is applied using a printing step, such as a gravure, flexographic, offset, letterpress, intaglio, or screen printing step. In another embodiment, the composition is applied using a painting step, such as a rolling, dipping, brushing, or spray painting step.

After providing the covert security feature, the covert security feature is observed by illuminating the object with non-visible radiation (step 706) to cause the covert flakes to fluoresce and a covert flake is identified (step 708). If the composition has base pigment flakes or particles that also fluoresce, it is understood that the covert flakes fluoresce significantly more or less, or at a different color, than the base pigment flakes or particles so that the covert flakes stand out in the composition and are easily identified. The identified covert flake is observed (step 710) for a security marking. In one embodiment, the covert flake has a selected shape and is observed while the object is illuminated with non-visible radiation. In another embodiment, the covert flake includes a symbol, and the covert flake is observed using visible light after the step of identifying the covert flake using non-visible radiation. In a particular embodiment, the step of observing one or more symbols on the covert flake is done under magnification of 50X-200X.

### IV. Exemplary Methods

Fig. 10 is a flow chart of a method 600 of making pigment flake according to an embodiment of the present invention. A roll substrate having a non-embossed ("smooth") portion and an embossed portion in a selected ratio of the deposition surface area of the roll substrate is provided (step 602). In one embodiment, the embossed portion is embossed with a frame for producing flakes having a selected shape. In an alternative embodiment, the embossed portion is embossed with a grating pattern or symbol. In an alternative embodiment, the substrate is patterned using a process other than embossing, such as laser ablation. At least one thin film layer is deposited on the roll substrate (step 604), and the deposited thin film layer(s) is processed into flake (step 606) to result in a flake mixture having a selected amount of taggent flakes. The yield of taggent flake depends on factors such as the type of thin-film layers being processed, the nature of the frame, grating pattern, or symbol, and processing parameters.

For example, referring to Figs. 2A and 2B, if 10% of the surface of the roll substrate is embossed with a grating or symbol, then a yield of approximately 10% taggent flake having the grating pattern or symbol is expected. If 10% of the surface of the roll substrate is embossed with a diamond-shaped frame, then a yield of about 9% is expected for dielectric-metal-dielectric flake because of the 10% yield loss processing the patterned portion of the thin film stack into shaped flakes. Similarly, a yield of about 5% is expected for shaped all-dielectric flake because of the 50% yield loss processing the patterned portion of the thin film stack into shaped flakes.

While the invention has been described above in terms of various specific embodiments, the invention may be embodied in other specific forms. Thus, the embodiments described above illustrate the invention, but are not restrictive of the invention, which is indicated by the following claims. All modifications and equivalents that come within the meaning and range of the claims are included within their scope.

## Claims

1. A plurality of shaped opaque covert flakes comprising a first plurality of flakes (18), wherein each of the plurality of shaped opaque covert inorganic flakes has a selected shape and a thickness less than 10 microns, and wherein the first plurality of the shaped opaque covert flakes have a same selected shape and have a symbol (17) or logo, but not including a symbol or logo being magnetic stripes.

2. A plurality of shaped opaque covert flakes as defined in claim 1 wherein at least some of the flakes (18) have a frame portion about a periphery thereof.

3. A plurality of shaped opaque covert flakes as defined in claim 1 wherein the shaped opaque covert flakes (18) are bright flakes (20).

4. A plurality of shaped opaque covert flakes as defined in claim 1 further comprising a second plurality of the shaped flakes having a same selected shape that is different from the shape of the first plurality of flakes.

5. A plurality of shaped opaque covert flakes as defined in claim 1 further comprising flakes having different shapes to form a plurality of mixed flakes.

6. A plurality of shaped opaque covert flakes as defined in claim 1 wherein the flakes (18) have a square, rectangular, trapezoidal, round or diamond shape.

7. A plurality of shaped opaque covert flakes as defined in claim 1 further comprising a second plurality of the shaped flakes having a different symbol or logo from the symbol or logo of the first plurality of shaped flakes.

8. A plurality of shaped opaque covert flakes as defined in claim 7 wherein the shape or symbol or logo of the second plurality of flakes is different than for the first plurality of shaped flakes.

9. A plurality of shaped opaque covert flakes as defined in claim 2 wherein the symbol (17) or logo is 0.5 to 20 micrometres tall.

10. A plurality of shaped opaque covert flakes as defined in claim 1 wherein the first plurality of flakes are bright pigment flakes (20) comprising a reflective layer (22) between two dielectric thin-film layers (24, 26).

11. A plurality of shaped opaque covert flakes as defined in claim 10 having a thickness between 1 and 3 microns.

12. A plurality of shaped opaque covert flakes as defined in claim 1 wherein the first plurality of flakes are bright flakes (20') comprising an elemental indicator layer (28), reflective layers (22', 22") between two dielectric thin-film layers (24', 26').

13. A plurality of shaped opaque covert flakes as defined in claim 1 wherein the first plurality of flakes are color-shifting pigment flakes (30) comprising a thin film stack (32), comprising a reflective metal layer (34), two spacer layers (36A, 36B) and two absorber layers (38A, 38B).

14. A coating composition comprising a carrier and a plurality of shaped opaque covert flakes as defined in claim 1.

15. A coating composition as claimed in claim 14 wherein the carrier further comprises base pigment dispersed in the carrier, and comprising 5-10 wt% of the shaped opaque covert flakes as defined in claim 1 and 95-90 wt% of the base pigment.

16. A coating composition as claimed in claim 14 comprising 0.25 to 5 wt% of the shaped opaque covert flakes as defined in claim 3.

17. A coating composition as claimed in claim 14 comprising a base pigment and a covert pigment, wherein the plurality of shaped opaque covert flakes comprises less than 1% of the total weight of pigment.

## Patentansprüche

1. Eine Vielzahl von geformten opaken verborgenen Flocken, beinhaltend eine erste Vielzahl von Flocken (18), wobei jede der Vielzahl von geformten opaken verborgenen anorganischen Flocken eine ausgewählte Form und eine Dicke von weniger als 10 Mikrometer aufweist und wobei die erste Vielzahl der geformten opaken verborgenen Flocken eine gleiche ausgewählte Form aufweist und ein Symbol (17) oder Logo, was jedoch kein Symbol oder Logo aus magnetischen Streifen umfasst, aufweist.

2. Vielzahl von geformten opaken verborgenen Flocken wie in Anspruch 1 definiert, wobei zumindest einige der Flocken (18) einen Rahmenabschnitt um einen Umfang davon aufweisen.

3. Vielzahl von geformten opaken verborgenen Flocken wie in Anspruch 1 definiert, wobei die geformten opaken verborgenen Flocken (18) helle Flocken (20) sind.

4. Vielzahl von geformten opaken verborgenen Flocken wie in Anspruch 1 definiert, die ferner eine zweite Vielzahl der geformten Flocken mit einer gleichen ausgewählten Form, die sich von der Form der ersten Vielzahl von Flocken unterscheidet, beinhaltet.

5. Vielzahl von geformten opaken verborgenen Flocken wie in Anspruch 1 definiert, die ferner Flocken mit unterschiedlichen Formen zum Bilden einer Vielzahl von gemischten Flocken beinhaltet.

6. Vielzahl von geformten opaken verborgenen Flocken wie in Anspruch 1 definiert, wobei die Flocken (18) eine quadratische, rechteckige, trapezförmige, runde oder rautenförmige Form aufweisen.

7. Vielzahl von geformten opaken verborgenen Flocken wie in Anspruch 1 definiert, die ferner eine zweite Vielzahl der geformten Flocken beinhaltet, die ein anderes Symbol oder Logo als das Symbol oder Logo der ersten Vielzahl von geformten Flocken aufweist.

8. Vielzahl von geformten opaken verborgenen Flocken wie in Anspruch 7 definiert, wobei sich die Form oder das Symbol oder Logo der zweiten Vielzahl von Flocken von der/dem der ersten Vielzahl von geformten Flocken unterscheidet.

9. Vielzahl von geformten opaken verborgenen Flocken wie in Anspruch 2 definiert, wobei das Symbol (17) oder Logo 0,5 bis 20 Mikrometer hoch ist.

10. Vielzahl von geformten opaken verborgenen Flocken wie in Anspruch 1 definiert, wobei es sich bei der ersten Vielzahl von Flocken um helle Pigmentflocken (20) handelt, die eine reflektierende Schicht (22) zwischen zwei dielektrischen Dünnfilmschichten (24, 26) beinhalten.

11. Vielzahl von geformten opaken verborgenen Flocken wie in Anspruch 10 definiert, mit einer Dicke von zwischen 1 und 3 Mikrometer.

12. Vielzahl von geformten opaken verborgenen Flocken wie in Anspruch 1 definiert, wobei es sich bei der ersten Vielzahl von Flocken um helle Flocken (20') handelt, die eine elementare Indikatorschicht (28), reflektierende Schichten (22', 22") zwischen zwei dielektrischen Dünnfilmschichten (24', 26') beinhalten.

13. Vielzahl von geformten opaken verborgenen Flocken wie in Anspruch 1 definiert, wobei es sich bei der ersten Vielzahl von Flocken um farbverschiebende Pigmentflocken (30) handelt, die einen eine reflektierende Metallschicht (34), zwei Abstandsschichten (36A, 36B) und zwei Absorberschichten (38A, 38B) beinhaltenden Dünnfilmstapel (32) beinhalten.

14. Eine Beschichtungszusammensetzung, die einen Träger und eine Vielzahl von geformten opaken verborgenen Flocken, wie in Anspruch 1 definiert, beinhaltet.

15. Beschichtungszusammensetzung gemäß Anspruch 14, wobei der Träger ferner ein in dem Träger dispergiertes Basispigment beinhaltet und zu 5-10 Gew.-% die geformten opaken verborgenen Flocken, wie in Anspruch 1 definiert, und zu 95-90 Gew.-% das Basispigment beinhaltet.

16. Beschichtungszusammensetzung gemäß Anspruch 14, die zu 0,25 bis 5 Gew.-% die geformten opaken verborgenen Flocken, wie in Anspruch 3 definiert, beinhaltet.

17. Beschichtungszusammensetzung gemäß Anspruch 14, die ein Basispigment und ein verborgendes Pigment beinhaltet, wobei die Vielzahl von geformten opaken verborgenen Flocken weniger als 1 % des Gesamtgewichts des Pigments ausmacht.

## Revendications

1. Une pluralité d'écailles cachées opaques conformées comprenant une première pluralité d'écailles (18), dans laquelle chaque écaille de la pluralité d'écailles inorganiques cachées opaques conformées a une conformation sélectionnée et une épaisseur inférieure à 10 microns, et dans laquelle la première pluralité des écailles cachées opaques conformées ont une même conformation sélectionnée et ont un symbole (17) ou logo, mais n'incluant pas de symbole ou logo qui sont des bandes magnétiques.

2. Une pluralité d'écailles cachées opaques conformées telle que définie dans la revendication 1 dans laquelle au moins une partie des écailles (18) a une portion de cadre autour d'une périphérie de celle-ci.

3. Une pluralité d'écailles cachées opaques conformées telle que définie dans la revendication 1 dans laquelle les écailles cachées opaques conformées (18) sont des écailles brillantes (20).

4. Une pluralité d'écailles cachées opaques conformées telle que définie dans la revendication 1 comprenant en outre une deuxième pluralité des écailles conformées ayant une même conformation sélectionnée qui est différente de la conformation de la première pluralité d'écailles.

5. Une pluralité d'écailles cachées opaques conformées telle que définie dans la revendication 1 comprenant en outre des écailles ayant différentes conformations afin de former une pluralité d'écailles mélangées.

6. Une pluralité d'écailles cachées opaques conformées telle que définie dans la revendication 1 dans laquelle les écailles (18) ont une conformation carrée, rectangulaire, trapézoïdale, ronde ou en diamant.

7. Une pluralité d'écailles cachées opaques conformées telle que définie dans la revendication 1 comprenant en outre une deuxième pluralité des écailles conformées ayant un symbole ou logo différent du symbole ou logo de la première pluralité d'écailles conformées.

8. Une pluralité d'écailles cachées opaques conformées telle que définie dans la revendication 7 dans laquelle la conformation ou le symbole ou le logo de la deuxième pluralité d'écailles sont différents de ceux pour la première pluralité d'écailles conformées.

9. Une pluralité d'écailles cachées opaques conformées telle que définie dans la revendication 2 dans laquelle le symbole (17) ou logo fait de 0,5 à 20 micromètres de haut.

10. Une pluralité d'écailles cachées opaques conformées telle que définie dans la revendication 1 dans laquelle la première pluralité d'écailles sont des écailles pigmentaires brillantes (20) comprenant une couche réfléchissante (22) entre deux couches de film mince diélectriques (24, 26).

11. Une pluralité d'écailles cachées opaques conformées telle que définie dans la revendication 10 ayant une épaisseur comprise entre 1 et 3 microns.

12. Une pluralité d'écailles cachées opaques conformées telle que définie dans la revendication 1 dans laquelle la première pluralité d'écailles sont des écailles brillantes (20') comprenant une couche d'indicateur élémentaire (28), des couches réfléchissantes (22', 22") entre deux couches de film mince diélectriques (24', 26').

13. Une pluralité d'écailles cachées opaques conformées telle que définie dans la revendication 1 dans laquelle la première pluralité d'écailles sont des écailles pigmentaires à variation de couleur (30) comprenant une pile de film mince (32) comprenant une couche métallique réfléchissante (34), deux couches d'espacement (36A, 36B) et deux couches d'absorbeur (38A, 38B).

14. Une composition de revêtement comprenant un support et une pluralité d'écailles cachées opaques conformées telle que définie dans la revendication 1.

15. Une composition de revêtement telle que revendiquée dans la revendication 14 dans laquelle le support comprend en outre un pigment de base dispersé dans le support, et comprenant de 5 à 10 % en poids des écailles cachées opaques conformées telles que définies dans la revendication 1 et de 95 à 90 % en poids du pigment de base.

16. Une composition de revêtement telle que revendiquée dans la revendication 14 comprenant de 0,25 à 5 % en poids des écailles cachées opaques conformées telles que définies dans la revendication 3.

17. Une composition de revêtement telle que revendiquée dans la revendication 14 comprenant un pigment de base et un pigment caché, dans laquelle la pluralité d'écailles cachées opaques conformées comprend moins de1 % du poids total de pigment.
